# EUROPÄISCHE PATENTSCHRIFT

(11) **EP 0 308 668 B1**
(45) Veröffentlichungstag und Bekanntmachung des Hinweises auf die Patenterteilung: **10.11.1993**
(21) Anmeldenummer: 88113731.9
(22) Anmeldetag: 24.08.1988
(51) Int. Cl.: B29C 49/22, B29C 49/42, B29C 49/48

(54) **Mehrschichtiger, durch Co-Extrusions-Blasformen hergestellter Kunststoffbehälter**
Multilayered coextrusion-blow-moulded plastics container
Récipient multicouche en matière plastique fabriqué par coextrusion-soufflage

(30) Priorität: 22.09.1987 DE 3731750
(43) Veröffentlichungstag der Anmeldung: 29.03.1989
(73) Patentinhaber: DAIMLER-BENZ AKTIENGESELLSCHAFT, 70327 Stuttgart (DE)
(72) Erfinder: Scheurenbrand, Dieter, D-7448 Wolfschlugen (DE); Wawra, Helmut, Dr., D-7054 Korb (DE)

(56) Entgegenhaltungen:
- EP-A- 0 204 200
- DE-A- 2 012 365
- DE-A- 2 914 938
- FR-A- 2 404 505
- US-A- 2 431 537
- PATENT ABSTRACTS OF JAPAN vol. 7, no. 1 (M-183)(1146) 6. Januar 1983& JP-A-57 160 616 (TOYO KOGYO ) 4. Oktober 1982
- PATENT ABSTRACTS OF JAPAN vol. 4, no. 45 (M-6)(527) 9. April 1980& JP-A-55 15 861 (KIYOOKURA ) 4. Februar 1980

## Beschreibung

Die Erfindung betrifft einen mehrschichtigen, durch Co-Extrusions-Blasformen hergestellten Kunststoffbehälter mit stegförmig ausgebildeter Quetschnaht entsprechend dem Oberbegriff des Anspruchs.

Mehrschichtige, durch Co-Extrusions-Blasformen hergestellte Kunststoffbehälter finden in zunehmendem Maße Verwendung, da durch die Mehrlagigkeit die positiven Eigenschaften verschiedener Kunststoffe kombiniert werden können. Die Behälterwand kann dadurch mit Eigenschaften versehen werden, die entweder mit einem Rohstoff allein nicht erreicht werden können oder die bei alleiniger Verwendung eines an sich geeigneten Rohstoffes zu hohe Materialkosten verursachen würden.

Mehrschichtige Behälter werden vor allem dort benötigt, wo man eine Verbesserung der Sperreigenschaften der Behälterwand gegenüber Gasen und Dämpfen, die durch Aufbringen einer Sperrschicht zu erreichen ist, braucht, ohne auf das Deformationsverhalten oder die Spannungsrißbeständigkeit des Trägermaterials verzichten zu können. Da die Sperr- oder Barriereschicht häufig aus einem gegenüber dem Trägermaterial artfremden Material besteht, wird zwischen Trägermaterial und Sperrschicht noch eine Haftvermittlerschicht angeordnet. Zum besseren mechanischen Schutz wird die Sperrschicht häufig zwischen zwei Trägerschichten angeordnet, so daß eine derart aufgebaute Behälterwand beispielsweise wie folgt aussieht: Trägerschicht (Polyolefin) - Haftvermittler - Sperrschicht (Polyamid) - Haftvermittler - Trägerschicht (Polyolefin), wobei die Schichtdicken der Sperr-und Haftvermittlerschichten gegenüber den Trägerschichten gering sind. Das Extrusionsblasformen ist an sich wohlbekannt. Nähere Einzelheiten bezüglich verwendbarer Kunststoffe und apparativer Details können z. B. den beiden Büchern "Extrusionsblasformen", Hrsg.: Verein DE Ingenieure, VDI-Ges. Kunststofftechnik - VDI-Verlag Düsseldorf, 1979 und "Technologien des Blasformens", das 1977 von demselben Herausgeber in demselben Verlag erschienen ist, entnommen werden.

Bei der Ausbildung der Hals- und Bodenquetschnähte im Verlauf der Behälter-Herstellung erfolgt an diesen Stellen eine Schwächung der Wand. Die Trägerschicht innen verbindet sich in der gewohnten Weise, Sperr- und Trägerschicht außen dagegen werden praktisch nur durchtrennt. Eine auf die Quetsch-Schweißnaht einwirkende Kraft muß dadurch allein von der Trägerschicht innen aufgenommen werden. Da die Sperrschichten nicht miteinander verschweißen, tritt zusätzlich im Nahtbereich eine erhöhte Diffusion auf.

Es sind daher Behälter bekannt geworden, bei denen zur Verbesserung der Festigkeit die Naht als von dem Behälter abstehende Stegnaht ausgeführt ist. Eine solche Stegnaht kann jedoch häufig aus optischen oder räumlichen Gründen nicht oder nicht in ausreichender Höhe zur Anwendung kommen, darüber hinaus ist auch ihre Festigkeit, insbesondere bei größeren Behältern, immer noch unzureichend.

Die Aufgabe der Erfindung besteht darin, einen Behälter zu finden, bei dem die Haltbarkeit der Naht wesentlich verbessert ist.

Diese Aufgabe wird bei einem Behälter gemäß dem Oberbegriff des Patentanspruchs 1 durch dessen kennzeichnende Merkmale gelöst.

Bei der Herstellung der Behälter durch Blasformen wird die Schweißnaht (Quetschnaht) als Steg ausgebildet, der labyrinth- oder mäanderförmig gefaltet ist und bei dem die Falten miteinander verschweißt sind. Gute Festigkeiten werden erreicht, wenn die Stegnaht mindestens 2-fach gefaltet ist. Ab einer ...-fachen Faltung tritt im allgemeinen keine Verbesserung der der Nahtfestigkeit mehr auf. Es ist ferner günstig, wenn die Länge der Stegnaht im entfalteten Zustand mindestens dem 3-fachen der Dicke des Coextrudates, d. h. der Wandstärke des Behälters im Bereich der Schweißstelle entspricht. Besonders günstig ist es, wenn neben der Verschweißung durch die Faltung noch ein formschlüssiger Verbund der Folien erreicht wird.

Anhand der Abbildung wird die Erfindung weiter erläutert. Es zeigen schematisch
- Figur 1: einen Schnitt durch eine extrudierte 5-fach-Folie,
- Figur 2 und 3: einen Teilschnitt eines Behälters mit einer besonders einfachen Stegnaht in vorgefalteter bzw. verschweißter Form,
- Figur 4 und 5: einen weiteren Ausschnitt mit einer mäanderförmig gefalteten Stegnaht in vorgefalteter und in verschweißter Form und
- Figur 6: eine andere Ausbildung einer mäanderförmig gefalteten Stegnaht.

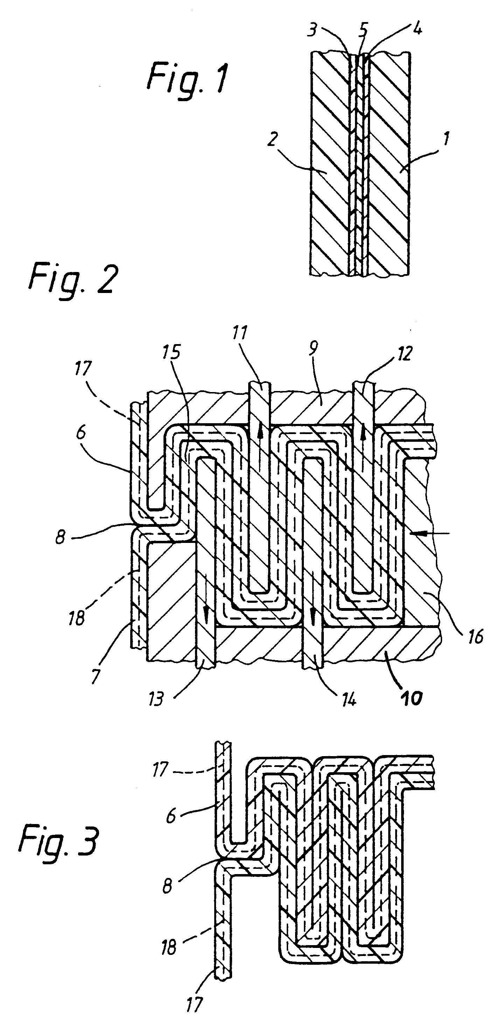

Figur 1 zeigt schematisch den Aufbau einer 5-fach-Folie. Die Folie besteht aus zwei tragenden Außenschichten1,2 aus Polypropylen, zwei Haftvermittlerschichten 3,4 und der dazwischen liegenden Diffusionssperrschicht 5 aus Polyamid.

Figur 2 zeigt einen Ausschnitt aus der Behälterwand und dem Formwerkzeug im Bereich der Schweißnaht. Die Behälterwand besteht aus den beiden Mehrschichtfolien 6 und 7, deren Sperrschicht jeweils durch die punktierte Linien 17 und 18 angedeutet ist. Die Folien stoßen bei 8 zusammen und treten in die beiden Formhälften 9 und 10 ein. Durch die obere Formhälfte 9 sowie die untere Formhälfte 10 in Verbindung mit den Schiebern 11 bis 14 wird in der aus den Folien 6 und 7 gebildeten Stegnaht 15 eine mäanderförmige Faltenbildung hervorgerufen. Werden die Schieber 11,12 und 13,14 in Pfeilrichtung in die oberen bzw. unteren Formhälften 9 bzw. 10 zurückgezogen und der Schieber 16 in Pfeilrichtung betätigt, so werden die gebildeten Falten zu dem in Figur 3 annähernd dargestellten massiven Block zusammengeschoben, in dem die einzelnen Falten miteinander verschweißt sind. Eine solche gefaltete Stegnaht, bei der die Falten miteinander verschweißt sind, ist gegenüber einer einfachen Stegnaht wesentlich haltbarer. Ein durch die Trägerschicht der Folien 6,7 diffundierender Behälterinhalt hat entlang der Diffusionssperrschichten 17, 18 einen langen, labyrinthartigen Weg vor sich, bis er ins Freie gelangen kann. Eine Geruchsbelästigung durch den Behälterinhalt bzw. ein merkbarer Substanzverlust des Behälterinhalts können daher weitgehend ausgeschlossen werden.

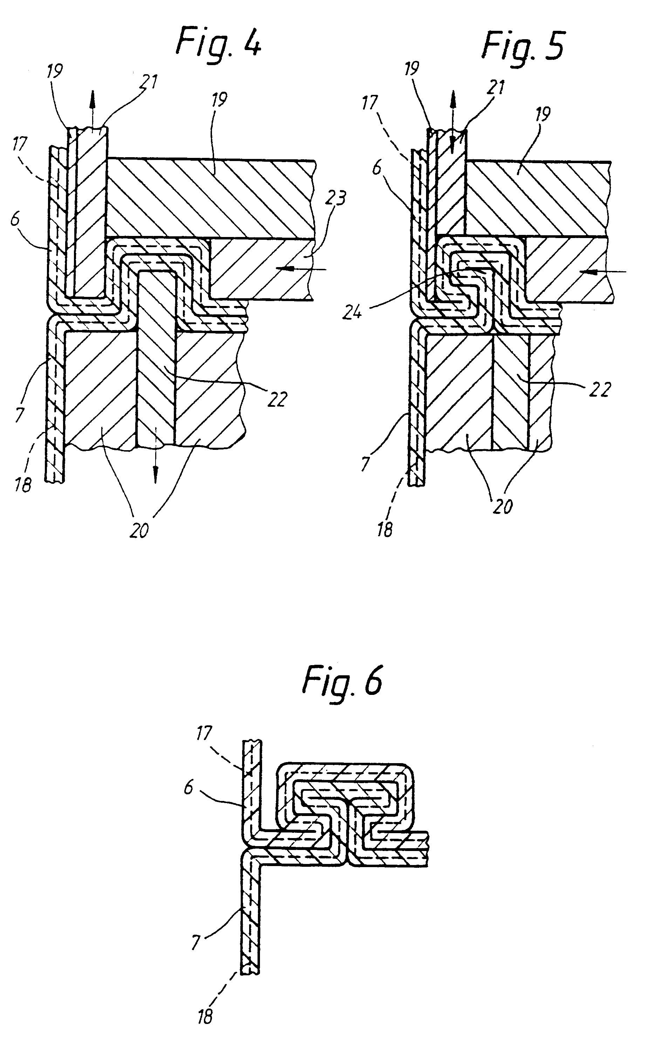

In den Figuren 4 und 5 wird eine weitere gefaltete Stegnaht im Vor- und Fertigstadium gezeigt, bei der neben der Verschweißung der beiden Folien 6 und 7 die Falten in Berstrichtung zusätzlich formschlüssig ineinandergreifen. Dadurch wird eine erhebliche mechanische Verstärkung der Stegnaht erreicht. Durch die obere Formhälfte 19, mit dem Schieber 21 und die untere Formhälfte 20 mit dem Schieber 22 wird dem aus den Folien 6 und 7 bestehenden Steg beim Schließen der Form ein hutartiges Profil aufgeprägt. Zieht man nun den Schieber 21 nach oben, den Schieber 22 nach unten und schiebt mit dem Schieber 23 in Richtung auf die Behälterwand, so ergibt sich die in Figur 5 dargestellte, gefaltete und verschweißte Stegnaht 24. Die Verschweißung der Falten am behälterseitigen Ende der Faltung kann ggf. durch ein kurzes Nachdrücken des Schiebers 21 nach unten verbessert werden. Einer weitere, besonders feste gefaltete und verschweißte Stegnaht ist in Figur 6 dargestellt. Die in Figur 6 gezeigte "knopfförmige" formschlüssige Faltung ist mechanisch besonders stabil.

Gefaltete und verschweißte Quetschnähte sind vor allem bei solchen Behältern angebracht, die über ein größeres Volumen verfügen und hohen Anforderungen an Bruch- und Stoßfestigkeit genügen sollen. Durch das neuartige Quetschnahtprofil wird die bisher aufgetretene Schwächung der Schweißnaht infolge einer mit der Trägerschicht der Blasfolie unverträglichen Diffusionssperrschicht ausgeglichen. Die gefaltete und verschweißte Quetschnaht kann bei allen für das Co-Extrusions-Blasformen geeigneten Materialien bzw. Materialkombinationen zur Anwendung kommen.

## Patentansprüche

1. Mehrschichtiger, durch Blasformen eines Koextrudates geformter Kunststoff-Behälter mit an der Schweißstelle befindlicher Stegnaht, wobei die Stegnaht labyrinth- oder mäanderförmig gefaltet ist, die Falten der Stegnaht miteinander verschweißt sind und in Berstrichtung formschlüssig ineinandergreifen,
**dadurch gekennzeichnet,**
daß die Länge der Stegnaht im entfalteten Zustand wenigstens dem 3-fachen der Dicke des Koextrudates entspricht und daß die Stegnaht mindestens 2-fach gefaltet ist.

## Claims

1. Multi-layered plastic container, formed by blow-moulding of a coextrudate, with web seam at the welding point, the web seam being folded in labyrinthal or meandering shape, the folds of the web seam being welded to each other and positively interlocking in the direction of bursting, characterised in that the length of the web seam in the unfolded state is equivalent to at least three times the thickness of the coextrudate and in that the web seam is folded at least doubly.

## Revendications

1. Récipient multicouche en matière plastique, fabriqué par soufflage d'un coextrudat, avec un joint en ruban disposé dans la zone de soudure, ce joint en ruban étant plié en forme de labyrinthe ou de méandres et les plis du joint en ruban étant soudés entre eux et s'accrochant mutuellement par complémentarité de formes dans la direction d'éclatement, caractérisé en ce que la longueur du joint en ruban dans l'état non plié correspond à au moins trois fois l'épaisseur du coextrudat et en ce que le joint en ruban est plié au moins deux fois.
